# EUROPEAN PATENT APPLICATION

(11) **EP 2 840 802 A1**
(43) Date of publication of application: **25.02.2015**
(21) Application number: 14179805.8
(22) Date of filing: 05.08.2014
(51) Int. Cl.: H04N 21/4788, G06Q 50/00

(54) **Method and apparatus for sharing media content and method and apparatus for displaying media content**

(30) Priority: 22.08.2013 CN 201310369975
(71) Applicant: Huawei Device Co., Ltd., Longgang District Shenzhen Guangdong 518129 (CN)
(72) Inventor: WANG, Yahui, 518129 Shenzhen (CN); FAN, Shunan, 518129 Shenzhen (CN); GAO, Wenmei, 518129 Shenzhen (CN); JING, Hao, 518129 Shenzhen (CN); LV, Xiaoqiang, 518129 Shenzhen (CN)
(74) Representative: Pfenning, Meinig & Partner GbR

(57) **Abstract**

The present invention discloses a method and an apparatus for sharing media content, where the method includes: extracting, by a first client, source address information of a first page and property information of media content displayed on the first page; and publishing, by the first client on a second page, the source address information of the first page and the property information of the media content, so that a second client can determine, on the second page based on the property information of the media content, the media content on the first page corresponding to the source address information of the first page, and display the media content. Meanwhile, the present invention further discloses a method and an apparatus for displaying media content.

## Description

### TECHNICAL FIELD

The present invention relates to the electronics field, and in particular, to a method and an apparatus for sharing media content and a method and an apparatus for displaying media content.

### BACKGROUND

With the development of technology, the Internet has been widely used. People have stepped into a high-speed information era brought about by the Internet and can acquire a large amount of media content (such as texts, pictures, videos, and audios) from the Internet.

Nowadays, people are no longer satisfied with pleasure in enjoying a certain piece of media content by themselves, but want to share the media content with more people. Therefore, a user-dominated "sharing" service currently becomes a popular service. Some websites provide source address information of media content published on the websites and support a user in sharing the media content to other websites by using the source address information of the media content. For example, a user shares an image of favorite clothes on a shopping website to other social networking sites or shares a favorite video on a video website to other social networking sites, so that other users can view the image or video.

In the prior art, not all websites provide the sharing service. Therefore, if source address information of media content cannot be extracted, the media content cannot be shared either.

In conclusion, a technical problem exists in the prior art that source address information of media content cannot be extracted from some websites which do not provide a sharing service, causing that the media content cannot be shared.

### SUMMARY

Embodiments of the present application provide a method and an apparatus for sharing media content and a method and an apparatus for displaying media content, which solve a technical problem in the prior art that source address information of media content cannot be extracted from some websites which do not provide a sharing service, causing that the media content cannot be shared.

According to a first aspect, a method for sharing media content is provided, where the method includes:
extracting, by a first client, source address information of a first page and property information of media content displayed on the first page; and
publishing, by the first client on a second page, the source address information of the first page and the property information of the media content, so that a second client can determine, on the second page based on the property information of the media content, the media content on the first page corresponding to the source address information of the first page, and display the media content.

With reference to the first aspect, in a first possible implementation manner, the publishing, by the first client on a second page, the source address information of the first page and the property information of the media content includes:
generating, by the first client, sharing information of the media content based on the source address information of the first page and the property information of the media content, where the sharing information of the media content includes the source address information of the first page and the property information of the media content; and
publishing, by the first client on the second page, the sharing information of the media content.

With reference to the first aspect or the first possible implementation manner of the first aspect, in a second possible implementation manner, the property information of the media content is specifically:
identity information of the media content; and/or
tag information of the media content.

With reference to the first aspect, the first possible implementation manner of the first aspect, or the second possible implementation manner of the first aspect, in a third possible implementation manner, the identity information of the media content is specifically:
name information of the media content; or
element ID information of the media content.

With reference to the first aspect, the first possible implementation manner of the first aspect, the second possible implementation manner of the first aspect, or the third possible implementation manner of the first aspect, in a fourth possible implementation manner, before the extracting, by a first client, source address information of a first page and property information of media content displayed on the first page, the method further includes:
monitoring, by the first client, whether a selecting operation performed by a user for the media content exists, where
the first client extracts the source address information of the first page and the property information of the media content when the first client intercepts the selecting operation.

According to a second aspect, a method for displaying media content is provided, where the method includes:
acquiring, by a second client from a second page, source address information of a first page and property information of media content displayed on the first page; and
determining, by the second client based on the property information of the media content, the media content on the first page corresponding to the source address information of the first page, and displaying the media content.

With reference to the second aspect, in a first possible implementation manner, the acquiring, by a second client from a second page, source address information of a first page and property information of media content displayed on the first page includes:
acquiring, by the second client, sharing information of the media content from the second page, where the sharing information of the media content includes the source address information of the first page and the property information of the media content; and
parsing, by the second client, the sharing information of the media content to obtain the source address information of the first page and the property information of the media content.

With reference to the second aspect or the first possible implementation manner of the second aspect, in a second possible implementation manner, the determining, by the second client based on the property information of the media content, the media content on the first page corresponding to the source address information of the first page, and displaying the media content includes:
creating, by the second client, a floating window dynamically;
loading, by the second client, the first page in the floating window based on the source address information of the first page;
determining, by the second client on the first page which is in the floating window, the media content based on the property information of the media content; and
displaying, by the second client, the media content in the floating window.

With reference to the second aspect, the first possible implementation manner of the second aspect, or the second possible implementation manner of the second aspect, in a third possible implementation manner, the property information of the media content is specifically:
identity information of the media content; and/or
tag information of the media content.

With reference to the second aspect, the first possible implementation manner of the second aspect, the second possible implementation manner of the second aspect, or the third possible implementation manner of the second aspect, in a fourth possible implementation manner, the determining, by the second client on the first page, the media content based on the property information of the media content, includes:
when the second client can determine, on the first page which is in the floating window, the media content based on the identity information of the media content, determining, by the second client on the first page, the media content based on the identity information of the media content; and/or
when the second client cannot determine, on the first page, the media content based on the identity information of the media content, determining, by the second client on the first page, the media content based on the identity information of the media content and the tag information of the media content.

According a third aspect, an apparatus for sharing media content is provided, where the apparatus includes:
an extracting unit, configured to extract source address information of a first page and property information of media content displayed on the first page; and
a publishing unit, configured to receive the source address information of the first page and the property information of the media content from the extracting unit, and publish, on a second page, the source address information of the first page and the property information of the media content.

With reference to the third aspect, in a first possible implementation manner, the publishing unit includes:
a generating module, configured to generate sharing information of the media content based on the source address information of the first page and the property information of the media content, where the sharing information of the media content includes the source address information of the first page and the property information of the media content; and
a publishing module, configured to receive the sharing information of the media content from the generating module and publish, on the second page, the sharing information of the media content.

With reference to the third aspect or the first possible implementation manner of the third aspect, in a second possible implementation manner, the property information of the media content is specifically:
identity information of the media content; and/or
tag information of the media content.

With reference to the third aspect, the first possible implementation manner of the third aspect, or the second possible implementation manner of the third aspect, in a third possible implementation manner, the identity information of the media content is specifically:
name information of the media content; or
element ID information of the media content.

With reference to the third aspect, the first possible implementation manner of the third aspect, the second possible implementation manner of the third aspect, or the third possible implementation manner of the third aspect, in a fourth possible implementation manner, the apparatus further includes:
a monitoring unit, configured to monitor, before the source address information of the first page and the property information of the media content displayed on the first page are extracted, whether a selecting operation performed by a user for the media content exists, where
the extracting unit extracts the source address information of the first page and the property information of the media content when the monitoring unit intercepts the selecting operation.

According to a fourth aspect, an apparatus for displaying media content is provided, where the apparatus includes:
an acquiring unit, configured to acquire, from a second page, source address information of a first page and property information of media content displayed on the first page; and
a display control unit, configured to receive the source address information of the first page and the property information of the media content from the acquiring unit; and determine, based on the property information of the media content, the media content on the first page corresponding to the source address information of the first page, and display the media content.

With reference to the fourth aspect, in a first possible implementation manner, the acquiring unit includes:
an acquiring module, configured to acquire sharing information of the media content from the second page, where the sharing information of the media content includes the source address information of the first page and the property information of the media content; and
a parsing module, configured to receive the sharing information of the media content from the acquiring module, and parse the sharing information of the media content to obtain the source address information of the first page and the property information of the media content.

With reference to the fourth aspect or the first possible implementation manner of the fourth aspect, in a second possible implementation manner, the display control unit includes:
a creating module, configured to create a floating window dynamically;
a loading module, configured to load the first page in the floating window based on the source address information of the first page;
a determining module, configured to receive the first page from the loading module and determine the media content, on the first page which is in the floating window, based on the property information of the media content; and
a control module, configured to receive the media content from the determining module and control the floating window to display the media content.

With reference to the fourth aspect, the first possible implementation manner of the fourth aspect, or the second possible implementation manner of the fourth aspect, in a third possible implementation manner, the property information of the media content is specifically:
identity information of the media content; and/or
tag information of the media content.

With reference to the fourth aspect, the first possible implementation manner of the fourth aspect, the second possible implementation manner of the fourth aspect, or the third possible implementation manner of the fourth aspect, in a fourth possible implementation manner, the determining module is specifically configured to:
when the media content can be determined on the first page which is in the floating window based on the identity information of the media content, determine, on the first page, the media content based on the identity information of the media content; and/or
when the media content cannot be determined on the first page based on the identity information of the media content, determine, on the first page, the media content based on the identity information of the media content and the tag information of the media content.

According to a fifth aspect, an apparatus for sharing media content is provided, where the apparatus includes:
a first processor, configured to extract source address information of a first page and property information of media content displayed on the first page and publish, on a second page, the source address information of the first page and the property information of the media content.

With reference to the fifth aspect, in a first possible implementation manner, the first processor is specifically configured to:
generate sharing information of the media content based on the source address information of the first page and the property information of the media content, where the sharing information of the media content includes the source address information of the first page and the property information of the media content; and publish, on the second page, the sharing information of the media content.

With reference to the fifth aspect or the first possible implementation manner of the fifth aspect, in a second possible implementation manner, the property information of the media content is specifically:
identity information of the media content; and/or
tag information of the media content.

With reference to the fifth aspect, the first possible implementation manner of the fifth aspect, or the second possible implementation manner of the fifth aspect, in a third possible implementation manner, the identity information of the media content is specifically:
name information of the media content; or
element ID information of the media content.

With reference to the fifth aspect, the first possible implementation manner of the fifth aspect, the second possible implementation manner of the fifth aspect, or the third possible implementation manner of the fifth aspect, in a fourth possible implementation manner, the first processor is further configured to:
monitor, before the source address information of the first page and the property information of the media content displayed on the first page are extracted, whether a selecting operation performed by a user for the media content exists; and extract the source address information of the first page and the property information of the media content when the first client intercepts the selecting operation.

According to a sixth aspect, an apparatus for displaying media content is provided, where the apparatus includes:
a second processor, configured to acquire, from a second page, source address information of a first page and property information of media content displayed on the first page; and determine, based on the property information of the media content, the media content on the first page corresponding to the source address information of the first page, and control displaying of the media content.

With reference to the sixth aspect, in a first possible implementation manner, the second processor is specifically configured to:
acquire sharing information of the media content from the second page, where the sharing information of the media content includes the source address information of the first page and the property information of the media content; and parse the sharing information of the media content to obtain the source address information of the first page and the property information of the media content.

With reference to the sixth aspect or the first possible implementation manner of the sixth aspect, in a second possible implementation manner, the second processor is specifically configured to:
create a floating window dynamically; load the first page in the floating window based on the source address information of the first page; determine, on the first page which is in the floating window, the media content based on the property information of the media content; and control the floating window to display the media content.

With reference to the sixth aspect, the first possible implementation manner of the sixth aspect, or the second possible implementation manner of the sixth aspect, in a third possible implementation manner, the property information of the media content is specifically:
identity information of the media content; and/or
tag information of the media content.

With reference to the sixth aspect, the first possible implementation manner of the sixth aspect, the second possible implementation manner of the sixth aspect, or the third possible implementation manner of the sixth aspect, in a fourth possible implementation manner, the second processor is specifically configured to:
when the media content can be determined, based on the identity information of the media content, on the first page which is in the floating window, determine, on the first page, the media content based on the identity information of the media content; and/or
when the media content cannot be determined on the first page based on the identity information of the media content, determine, on the first page, the media content based on the identity information of the media content and the tag information of the media content.

Beneficial effects brought by the technical solutions in the embodiments of the present application are as follows:

According to the method for sharing media content provided in the first aspect, the method for displaying media content provided in the second aspect, the apparatus for sharing media content provided in the third aspect or the fifth aspect, and the apparatus for displaying media content provided in the fourth aspect or the sixth aspect, a first client acquires source address information of a first page and property information of shared media content and publishes, on a second page, the source address information of the first page and the property information of the media content, so that a second client acquires, from the second page, the source address information of the first page and the property information of the media content, then acquires the first page according to the source address information of the first page, and further determines and displays the media content according to the property information of the media content. In this way, the technical problem in the prior art that source address information of media content cannot be extracted from some websites which do not provide a sharing service, causing that the media content cannot be shared, is effectively solved, thereby implementing a technical effect that media content can still be effectively and quickly shared in a case that source address information of the media content cannot be extracted.

### BRIEF DESCRIPTION OF DRAWINGS

FIG. 1 is a flowchart of a method for sharing media content according to Embodiment 1 of the present application;
FIG. 2 is a detailed flowchart of step S102 in Embodiment 1 of the present application;
FIG. 3 is a flowchart of a method for displaying media content in Embodiment 2 of the present application;
FIG. 4 is a detailed flowchart of step S301 in Embodiment 2 of the present application;
FIG. 5 is a detailed flowchart of step S302 in Embodiment 2 of the present application;
FIG. 6 is a detailed flowchart of step S503 in Embodiment 2 of the present application;
FIG. 7 is a schematic structural diagram of an apparatus for sharing media content in Embodiment 3 of the present application;
FIG. 8 is a schematic structural diagram of an apparatus for displaying media content in Embodiment 4 of the present application;
FIG. 9 is a schematic structural diagram of an apparatus for sharing media content in Embodiment 5 of the present application; and
FIG. 10 is a schematic structural diagram of an apparatus for displaying media content in Embodiment 6 of the present application.

### DESCRIPTION OF EMBODIMENTS

Embodiments of the present application provide a method and an apparatus for sharing media content and a method and an apparatus for displaying media content, which solve a technical problem in the prior art that source address information of media content cannot be extracted from some websites which do not provide a sharing service, causing that the media content cannot be shared.

In the foregoing mentioned source address information of media content, a storage location of the media content is recorded, which is specifically as follows:

Case 1: When a storage location of the media content can be directly located by using URL (Uniform Resource Locator, uniform resource locator) information of a first page, the URL information of the first web page is source address information of the media content to be extracted; and the URL information of the first web page can be directly extracted in case 1.

Case 2: When the storage location of the media content cannot be directly located by using URL information of a first page, generally in this case, the first page displays multiple pieces of media content. In this case, SRC (Source, source) property information or Href (Hypertext Reference, hypertext reference) property information of the media content to be shared may be attempted to be extracted, where the SRC property information or the Href property information of the media content is the source address information of the media content to be extracted.

Generally, on a page where a sharing service is provided, the source address information of the media content is encapsulated and then provided for a user. When needing to share the media content, the user can trigger a "share to" icon on the page to acquire the source address information of the media content, so as to further share the media content to another page. However, actually, pages on many websites do not provide the sharing service or many websites do not provide the sharing service for every piece of media content displayed on the websites. In this case, the user cannot share any piece of media content on such website pages.

To solve the foregoing technical problem, a general idea of the technical solutions of the present application is as follows:
a method for sharing media content, including:
   first, extracting, by a first client, source address information of a first page and property information of media content displayed on the first page; and
   then, publishing, by the first client on a second page, the source address information of the first page and the property information of the media content, so that a second client can determine, on the second page based on the property information of the media content, the media content on the first page corresponding to the source address information of the first page, and display the media content.

To make the objectives, technical solutions, and advantages of the embodiments of the present application more clearly, the following clearly and completely describes the technical solutions in the embodiments of the present application with reference to the accompanying drawings in the embodiments of the present application. Apparently, the described embodiments are merely a part rather than all of the embodiments of the present application. All other embodiments obtained by a person of ordinary skill in the art based on the embodiments of the present application without creative efforts shall fall within the protection scope of the present invention.

It is firstly noted that the term "and/or" in this specification describes only an association relationship for describing associated objects and indicates that three relationships may exist. For example, A and/or B may represent the following three cases: Only A exists, both A and B exist, and only B exists. In addition, the character "/" in this specification generally indicates an "or" relationship between the associated objects.

### Embodiment 1

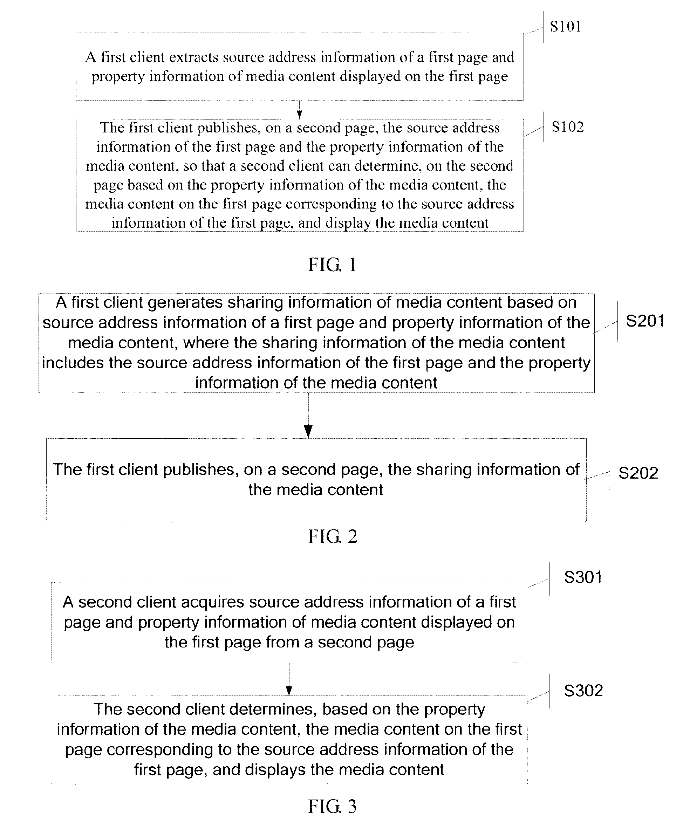

An embodiment of the present application provides a method for sharing media content. As shown in FIG. 1, the method includes:

Step S101: A first client extracts source address information of a first page and property information of media content displayed on the first page.

In this embodiment, the method for sharing media content is applied to the first client, where the first client may be: a mobile phone, a tablet computer, a PDA (Personal Digital Assistant, personal digital assistant), a vehicle-mounted computer, or the like. The method for sharing media content may be integrated in an operating environment of a browser or an operating system on the first client. The foregoing mentioned first page may be any page on a website, any page of a web application, or the like. For example, by using a browser on a mobile phone/computer, any page on a certain website is visited or any page of a certain web application is loaded. This embodiment of the present application constitutes no specific limitation on a specific type of the first page.

In a specific implementation process, the foregoing mentioned media content generally refers to media content displayed on the first page, such as an image, a video, or an audio.

In a specific implementation process, the source address information of the first page is URL information of the first page where the media content is located. Extraction of the URL information of the first page can be implemented by using the following command:
document.getElementById("txtPage").value=parent.document.location.

Step S102: The first client publishes, on a second page, the source address information of the first page and property information of the media content, so that a second client can determine, on the second page based on the property information of the media content, the media content on the first page corresponding to the source address information of the first page, and display the media content.

In a specific implementation process, the second page may be: a website page, a page of a web application, or a page of a local application, which is different from the first page, where the web application is an application under the operating environment of the browser on the first client, and the local application is an application installed on an operating system of an electronic device. The web application/local application may be specifically: a communications application, a social application, a news application, and the like. This embodiment of the present application constitutes no specific limitation on a specific type of the second page.

More specifically, as shown in FIG. 2, step S102 includes:

Step S201: The first client generates sharing information of the media content based on the source address information of the first page and the property information of the media content, where the sharing information of the media content includes the source address information of the first page and the property information of the media content.

In a specific implementation process, the source address information of the first page is used to enable the second client to acquire the first page; and the property information of the media content is used to enable the second client to determine, on the first page, the media content. The first client packs and encapsulates the source address information of the first page and the property information of the media content to generate the sharing information of the media content.

Step S202: The first client publishes, on the second page, the sharing information of the media content.

In a specific implementation process, the first client may publish, on the second page, the sharing information of the media content through the Internet, so as to enable the second client to acquire the sharing information of the media content from the second page and resolve the source address information of the first page and the property information of the media content from the sharing information of the media content.

Further, the first client acquires the first page based on the source address information of the first page, and determines and displays, on the first page, the media content based on the property information of the media content.

In this embodiment of the present application, a first client acquires source address information of a first page and property information of shared media content and publishes, on a second page, the source address information of the first page and the property information of the media content, so that a second client acquires, from the second page, the source address information of the first page and the property information of the media content, then acquires the first page according to the source address information of the first page, and further determines and displays the media content according to the property information of the media content. In this way, a technical problem in the prior art that source address information of media content cannot be extracted from some websites which do not provide a sharing service, causing that the media content cannot be shared, is effectively solved, thereby implementing a technical effect that media content can still be effectively and quickly shared in a case that source address information of the media content cannot be extracted.

In a specific implementation process, when the media content is a video file, an image with a smaller resolution may be obtained in a manner of capturing any frame of image in the video file and decreasing a resolution of the frame of image, the image with a smaller resolution is used as a video screenshot of the video file, and the video screenshot and the sharing information of the media content are published together on the second page. In this way, a user of the second client can understand general content of the video file by using the video screenshot.

Further, the property information of the media content may be:
identity information of the media content; and/or
tag information of the media content.

In a specific implementation process, the identity information may be: name information of the media content, element ID (Element ID) information of the media content, or the like.

In a specific implementation process, the tag information of the media may be extracted by using a document object model (DOM, Document Object Model) tree. The tag information includes: <img> tag information of an image type property, <audio> tag information of an audio type property, <video> tag information of a video type property, and the like.

In a specific implementation process, the first client may determine, based on tag information of shared media content, a type of the media content (for example, whether it is a video, an audio, an image, or the like) and publish, on the second page, type information and the name information of the media content together with the sharing information of the media content, so as to enable the user of the second client to roughly understand the media content by using the name information and the type information of the media content.

In a specific implementation process, the identity information of the media content and the tag information of the media content are used to enable the second client to determine, on the first page, the media content.

Further, before step S101, the method further includes:
monitoring, by the first client, whether a selecting operation performed by a user for the media content exists, where the first client performs step S101 when the first client intercepts the selecting operation.

In a specific implementation process, the user may implement the operation of selecting the media content to be shared specifically by means of clicking/double-clicking/right clicking/hovering over, by using a mouse connected to the first client, a display area where the media content is located. When the first page displays multiple pieces of media content the user intends to share, the selecting operation may be specifically as follows: The user may frame, by using the mouse, multiple pieces of media content the user intends to share, thereby implementing a technical effect of directly selecting on the first page the multiple pieces of media content to be shared. Certainly, the user may also implement the foregoing click operation, a double-click, or frame selection operation by using a touchscreen disposed on the first client. This embodiment of the present application constitutes no specific limitation on a specific type of the selecting operation.

In a specific implementation process, the task of monitoring whether the selecting operation performed by the user for the media content exists may be undertaken under the operating environment of the browser or the operating system on the first client, and a specific monitoring manner is as follows:

The first client starts a user operation monitoring process and detects whether an onclick (click)/onhover (hover)/ondown (frame selection) event exists in the display area where the media content is displayed; and when detecting an onclick (click)/onhover (hover)/ondown (frame selection) event, the first client determines that a selecting operation performed by the user for the media content is intercepted.

In a specific implementation process, after the user finishes the selecting operation for the media content, a page list may pop up on the first client for the user to select, where the page list includes: page identity information of pages on multiple websites; and the user may select, in the list, the second page to which the user expects to share the media content. The first client provides a sharing interface and calls the page list through an API interface (software programming interface) that interacts with the operating system.

In practice, the second page may be a page on which user identity authentication is required, that is, when logging in to the second page by using the first client, the user is required to input identity authentication information (such as a user name and a corresponding password). In this case, when the user inputs the identity authentication information of the second page for the first time, the first client may acquire and store the identity authentication information; and when needing to visit the second page once again, the user directly extracts the identity authentication information for authentication. In this way, the user's sharing operation for the media content can be simplified, thereby further implementing a technical effect of quickly sharing media content to be shared.

In terms of a whole sharing process of the media content, the shared media content is still stored on an electronic device/a server where the first page is located, instead of being dumped into an electronic device/a server where the second page is located. Because a task of storing the media content still remains on the electronic device/the server side where the first page is located, a technical effect is implemented that storage space of the electronic device/the server where the second page is located is saved.

In another embodiment of the present application, multiple pieces of media content can be shared simultaneously. Then, source address information of a page where each piece of media content is located and property information of each piece of media content are acquired separately, encapsulated in a list manner, and published on the second page. Because a method for sharing multiple pieces of media content is basically the same as a method for sharing one piece of media content, a person of ordinary skill in the art can figure out how to share multiple pieces of media content according to the method for sharing one piece of media content. Therefore, the method for sharing multiple pieces of media content is not described herein in detail.

### Embodiment 2

Based on a same design idea, an embodiment of the present application further provides a method for displaying media content. The method for displaying media content is applied on a second client, where the second client may be: a mobile phone, a tablet computer, a PDA (Personal Digital Assistant, personal digital assistant), an vehicle-mounted computer, or the like. The method for displaying media content may be integrated into an operating environment of a browser or an operating system on the second client.

As shown in FIG. 3, the method for displaying media content includes:
Step S301: The second client acquires, from a second page, source address information of a first page and property information of media content displayed on the first page.

Step S302: The second client determines, based on the property information of the media content, the media content on the first page corresponding to the source address information of the first page, and displays the media content.

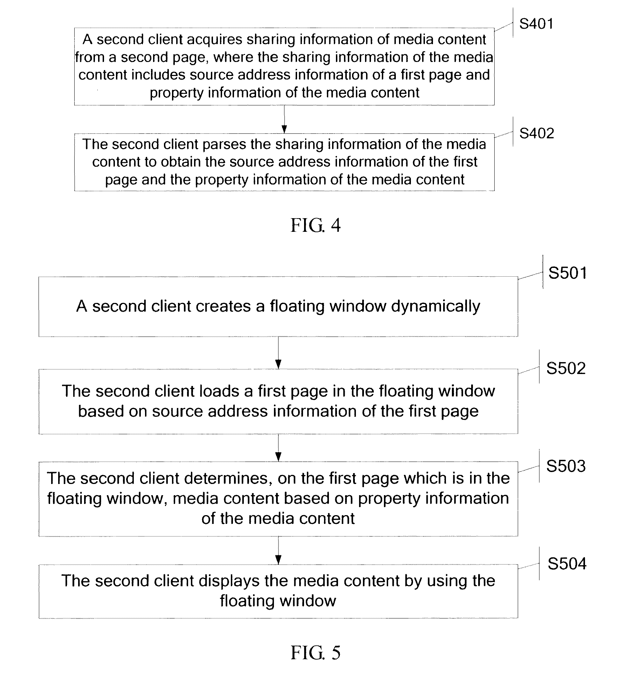

Further, as shown in FIG. 4, step S301 specifically includes:
Step S401: The second client acquires sharing information of the media content from the second page, where the sharing information of the media content includes the source address information of the first page and the property information of the media content.

In a specific implementation process, the source address information of the first page is URL information of the first page.

In a specific implementation process, the second page may be: a website page or a page of a web application/a local application, where the website maybe: a social networking site, a news website, a shopping website, or the like; and the web application/ the local application may be: a social application, a news application, a shopping application, a game application, or the like. Herein, this embodiment of the present application constitutes no specific limitation on a specific type of the second page.

Step S402: The second client parses the sharing information of the media content to obtain the source address information of the first page and the property information of the media content.

Further, as shown in FIG. 5, step S302 includes:
Step S501: The second client creates a floating window dynamically.

In a specific implementation process, the floating window may be an iframe floating window, and the second client may implement dynamic creation of the iframe floating window by using the following command:
document.createElement("iframe").

Step S502: The second client loads the first page in the floating window based on the source address information of the first page.

In a specific implementation process, the second client visits the first page based on the source address information of the first page and loads all content on the first page to the floating window.

Step S503: The second client determines, on the first page which is in the floating window, the media content based on the property information of the media content.

In a specific implementation process, after the second client loads all content on the first page to the floating window, the second client further determines, on the first page which is loaded to the floating window, the shared media content based on the property information of the media content.

Step S504: The second client displays the media content by using the floating window.

The second client displays the media content by using the iframe floating window, and therefore it is unnecessary to create a page outside the second page to display the media content, thereby omitting a process in which a user exits the second page or redirects to a newly-created page from the second page.

In a specific implementation process, after the second client displays the media content by using the iframe floating window, the media content may be released so as to reduce storage space of the second client occupied by the media content, which implements a technical effect of saving the storage space of the second client.

Further, the property information of the media content is specifically:
identity information of the media content; and/or
tag information of the media content.

In a specific implementation process, the identity information of the media content may be: name information of the media content or element ID information of the media content.

In a specific implementation process, the tag information of the media content may be: <img> tag information of an image type property, <audio> tag information of an audio type property, <video> tag information of a video type property, and the like.

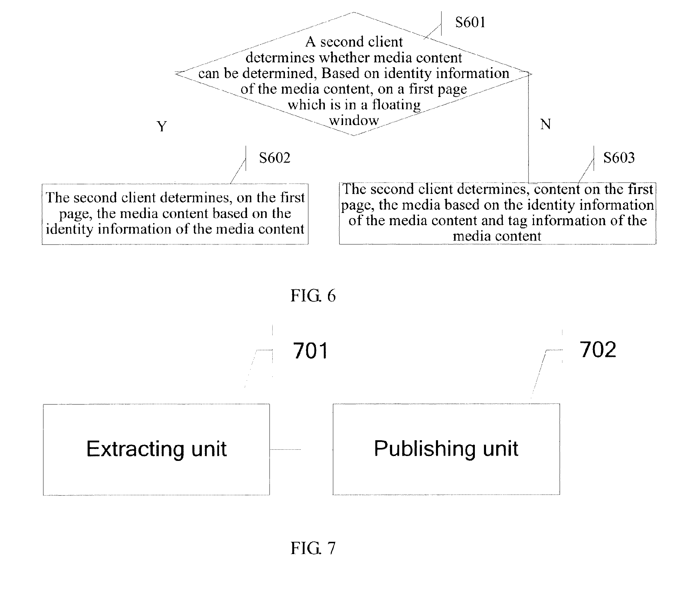

Further, as shown in FIG. 6, step S503 includes:
Step S601: The second client determines whether the media content can be determined on the first page which is in the floating window based on the identity information of the media content.
Step S602: When the second client can determine, on the first page which is in the floating window, the media content based on the identity information of the media content, the second client determines, on the first page, the media content based on the identity information of the media content.

In a specific implementation process, the first page generally displays multiple pieces of media content, where each piece of media content has one piece of identity information, and each piece of identity information is different. In this case, the second client may determine, on the first page, the media content by using the identity information of the media content.

Step 603: When the second client cannot determine, on the first page, the media content based on the identity information of the media content, the second client determines, on the first page, the media content based on the identity information of the media content and the tag information of the media content.

In a specific implementation process, the first page generally displays multiple pieces of media content, where each piece of media content has one piece of identity information, and another piece of media content having the same identity information as the shared media content may exist. In this case, the second client cannot determine, on the first page, the media content merely by depending on the identity information of the media content. Therefore, the second client needs to determine the media content among the media content and other pieces of media content further based on the tag information of the media content. For example, both video media content A named "Geography of China" (its tag information is <video>) and audio media content B named "Geography of China" (its tag information is <audio>) exist on the first page. In this case, the second client may first preliminarily determine, on the first page, either media content A or media content B as the shared media content based on the identity information (that is, name information "Geography of China") of the shared media content. Further, the second client determines media content A as the shared media content based on the tag information <video> of the shared media content.

In another embodiment of the present application, the second client may acquire a sharing list including sharing information of multiple pieces of media content from the second page, where the sharing list includes source address information of a page where each piece of media content in the media content is located and property information of each piece of media content. In this case, the second client may provide, in a floating window, a selecting list with respect to the shared media content for a user to select media content the user intends to display from the media content. After the user finishes a selection, the floating window displays selected media content sequentially one by one based on the selection of the user. For example, if the sharing list includes sharing information of multiple pieces of video/audio media content, after the user selects a part of the video/audio media content from the sharing list, the floating window plays and displays the selected media content sequentially one by one based on the selection of the user.

### Embodiment 3

Based on a same design idea, an embodiment of the present application further provides an apparatus for sharing media content, such as a mobile phone, a tablet computer, and a notebook computer. Referring to FIG. 7, the apparatus includes: an extracting unit 701, configured to extract source address information of a first page and property information of media content displayed on the first page; and a publishing unit 702, configured to receive the source address information of the first page and the property information of the media content from the extracting unit 701, and publish, on a second page, the source address information of the first page and the property information of the media content.

Further, the publishing unit 702 includes:
a generating module, configured to generate sharing information of the media content based on the source address information of the first page and the property information of the media content, where the sharing information of the media content includes the source address information of the first page and the property information of the media content; and a publishing module, configured to receive the sharing information of the media content from the generating module and publish, on the second page, the sharing information of the media content.

Further, the property information of the media content is specifically: identity information of the media content; and/or tag information of the media content.

Further, the identity information of the media content is specifically: name information of the media content; or element ID information of the media content.

Further, the apparatus further includes:
a monitoring unit, configured to monitor, before the source address information of the first page and the property information of the media content displayed on the first page are extracted, whether a selecting operation performed by a user for the media content exists, where the extracting unit extracts the source address information of the first page and the property information of the media content when the monitoring unit intercepts the selecting operation.

### Embodiment 4

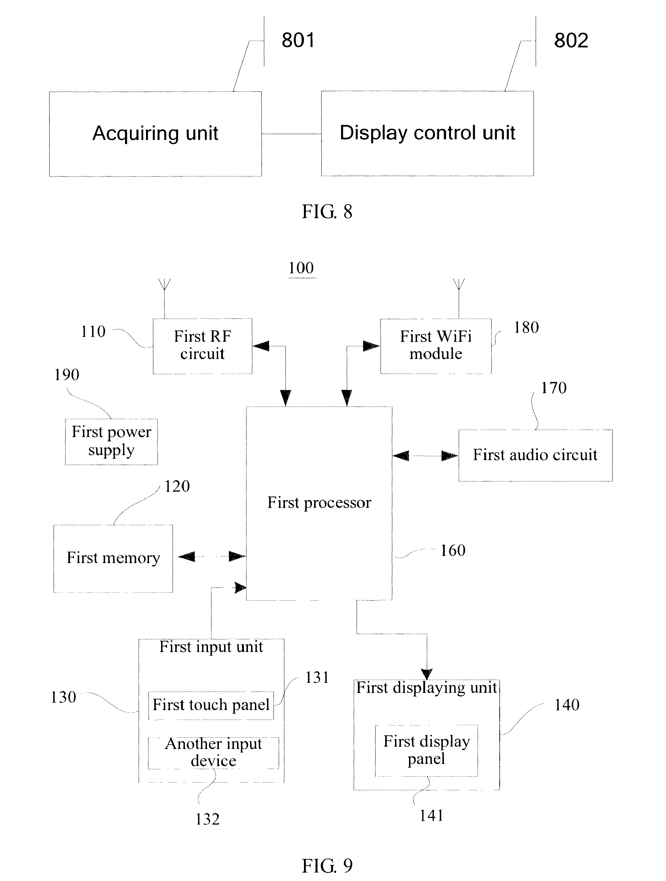

Based on a same design idea, an embodiment of the present application further provides an apparatus for displaying media content, such as a mobile phone, a tablet computer, a notebook computer, and the like. Referring to FIG. 8, the apparatus includes: an acquiring unit 801, configured to acquire, from a second page, source address information of a first page and property information of media content displayed on the first page; and a display control unit 802, configured to receive the source address information of the first page and the property information of the media content from the acquiring unit 801, determine, based on the property information of the media content, the media content on the first page corresponding to the source address information of the first page, and display the media content.

Further, the acquiring unit 801 includes:
an acquiring module, configured to acquire sharing information of the media content from the second page, where the sharing information of the media content includes the source address information of the first page and the property information of the media content; and a parsing module, configured to receive the sharing information of the media content from the acquiring module and parse the sharing information of the media content to obtain the source address information of the first page and the property information of the media content.

Further, the display control unit 802 includes:
a creating module, configured to create a floating window dynamically; a loading module, configured to load the first page in the floating window based on the source address information of the first page; a determining module, configured to receive the first page from the loading module and determine, on the first page which is in the floating window, the media content based on the property information of the media content; and a control module, configured to receive the media content from the determining module and control the floating window to display the media content.

Further, the property information of the media content is specifically: identity information of the media content; and/or tag information of the media content.

Further, the determining module is specifically configured to: when the media content can be determined on the first page which is in the floating window based on the identity information of the media content, determine, on the first page, the media content based on the identity information of the media content; and/or when the media content cannot be determined on the first page based on the identity information of the media content, determine, on the first page, the media content based on the identity information of the media content and the tag information of the media content.

### Embodiment 5

This embodiment of the present invention relates to an apparatus 100 for sharing media content, where the apparatus 100 may be a mobile phone, a tablet computer, a PDA (Personal Digital Assistant, personal digital assistant), a vehicle-mounted computer, or the like.

FIG. 9 shows a schematic structural diagram of the apparatus 100 for sharing media content according to this embodiment of the present application.

Referring to FIG. 9, the apparatus 100 for sharing media content according to this embodiment of the present application includes: a first processor 160, configured to extract source address information of a first page and property information of media content displayed on the first page; and publish, on a second page, the source address information of the first page and the property information of the media content.

The apparatus 100 may further include: a first memory 120, configured to store the first page obtained from a server/an electronic device where the first page is located, where the first page includes one or more pieces of media content. The first memory 120 may be one of an NVRAM nonvolatile random access memory, a DRAM dynamic random access memory, an SRAM static random access memory, a flash memory, and the like; and/or one of a hard disk, an optical disc, a USB flash drive, a diskette, a tape drive, and the like.

The apparatus 100 may further include: a first RF (radio frequency, radio frequency) circuit 110, configured to publish, on the second page, the source address information of the first page and the property information of the media content by using a radio frequency electromagnetic wave.

The apparatus 100 may further include: a first wifi module 180, configured to publish, on the second page in a wifi manner, the source address information of the first page and the property information of the media content.

The apparatus 100 may further include a first displaying unit 140, configured to display the first page. The first displaying unit 140 may include a first display panel 141. Optionally, a form such as an LCD (Liquid Crystal Display, liquid crystal display) or an OLED (Organic Light-Emitting Diode, organic light-emitting diode) may be adopted to configure the display panel 141.

The apparatus 100 may further include: a first audio unit 170, configured to, when the apparatus 100 is playing video/audio media content on the first page, output associated audio information of the video/audio media content.

Further, the first processor 160 is specifically configured to:
generate sharing information of the media content based on the source address information of the first page and the property information of the media content, where the sharing information of the media content includes the source address information of the first page and the property information of the media content; and publish, on the second page, the sharing information of the media content.

Further, the property information of the media content is specifically:
identity information of the media content; and/or
tag information of the media content.

Further, the identity information of the media content is specifically:
name information of the media content; or
element ID information of the media content.

Further, the first processor 160 is further configured to:
monitor, before the source address information of the first page and the property information of the media content displayed on the first page are extracted, whether a selecting operation performed by a user for the media content exists; and extract the source address information of the first page and the property information of the media content when a first client intercepts the selecting operation.

The apparatus 100 may further include: a first input unit 130, which may be configured to receive the selecting operation performed by the user for the media content. Specifically, in this embodiment of the present application, the first input unit 130 may include a first touch panel 131. The first touch panel 131, also called a touchscreen, may collect a touch operation (such as an operation performed by the user using a finger, a touch pen, and any proper object or accessory on the first touch panel 131 or on the first touch panel 131) performed by the user on or near the touchscreen and drive a corresponding connecting apparatus according to a preset program. Optionally, the first touch panel 131 may include two parts: a touch detecting apparatus and a touch controller, where the touch detecting apparatus detects a touch direction of the user and a signal brought by a touch operation and transmits the signal to the touch controller; and the touch controller receives touch information from the touch detecting apparatus, converts the touch information into touch coordinates, then transmits the touch coordinates to the first processor 160, and receives and executes a command sent from the first processor 160. In addition, multiple types of touchscreens, such as a resistive touchscreen, a capacitive touchscreen, an infrared touchscreen, and a surface acoustic wave touchscreen may be adopted to implement the first touch panel 131. In addition to the first touch panel 131, the first input unit 130 may further include one or more other input devices 132, where the one or more other input devices 132 may include but are not limited to one or more of the following: a physical keyboard, a function key (such as a volume control key and an on/off key), a trackball, a mouse, an operating lever, and the like.

The first processor 160 is a control center of the apparatus 100, uses various interfaces and cables to connect all parts of the whole apparatus, and performs functions of a terminal 100 and processes data by running or executing a software program and/or a module stored in the first memory 120, so as to implement overall monitoring for the terminal 100. Optionally, the processor 160 may include one or more processing units.

Finally, the apparatus 100 may further include: a first power supply 190, configured to supply power for the first processor 160, and/or the first memory 120, and/or the first input unit 130, and/or the first displaying unit 140, and/or the first audio circuit 170, and/or the first RF circuit 110, and/or the first WIFI module 180.

### Embodiment 6

This embodiment of the present invention relates to an apparatus 200 for displaying media content, where the apparatus 200 may be a mobile phone, a tablet computer, a PDA (Personal Digital Assistant, personal digital assistant), a vehicle-mounted computer, or the like.

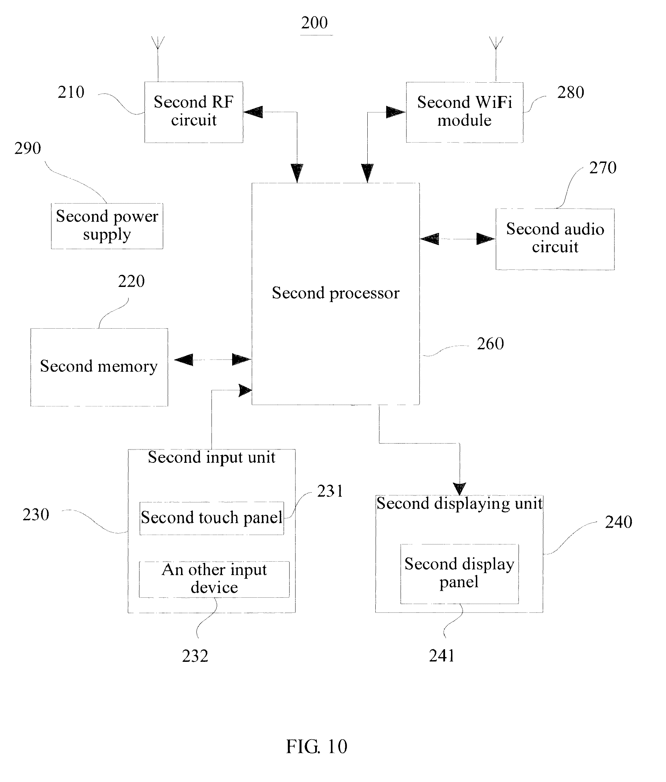

FIG. 10 shows a schematic structural diagram of the apparatus 200 for displaying media content according to this embodiment of the present invention.

Referring to FIG. 10, the apparatus 200 for displaying media content according to this embodiment of the present invention includes: a second processor 260, configured to acquire, from a second page, source address information of a first page and property information of media content displayed on the first page; and determine, based on the property information of the media content, the media content on the first page corresponding to the source address information of the first page, and control displaying of the media content.

The apparatus 200 may further include: a second memory 220, configured to store the source address information of the first page and the property information of the media content displayed on the first page that are obtained from a server/an electronic device where the second page is located. The first memory 220 may be one of an NVRAM nonvolatile random access memory, a DRAM dynamic random access memory, an SRAM static random access memory, a Flash flash memory, and the like; and/or one of a hard disk, an optical disc, a USB flash drive, a diskette, a tape drive, or the like.

Further, the second processor 260 is specifically configured to:
acquire sharing information of the media content from the second page, where the sharing information of the media content includes the source address information of the first page and the property information of the media content; and parse the sharing information of the media content to obtain the source address information of the first page and the property information of the media content.

The apparatus 200 may further include: a second RF (radio frequency, radio frequency) circuit 210, configured to acquire, by using a radio frequency electromagnetic wave, the source address information of the first page and the property information of the media content from the server/the electronic device where the second page is located.

The apparatus 200 may further include: a second wifi module 280, configured to acquire, in a wifi manner, the source address information of the first page and the property information of the media content from the server/the electronic device where the second page is located.

Further, the second processor 260 is specifically configured to:
create a floating window dynamically; load the first page in the floating window based on the source address information of the first page; determine, on the first page which is in the floating window, the media content based on the property information of the media content; and control the floating window to display the media content.

The apparatus 200 may further include: a first displaying unit 240, configured to display the second page and the floating window. The first displaying unit 240 may include a first display panel 241. Optionally, a form such as an LCD (Liquid Crystal Display, liquid crystal display) or an OLED (Organic Light-Emitting Diode, organic light-emitting diode) may be adopted to configure the display panel 241.

The apparatus 200 may further include a second audio unit 270, configured to, when a floating window plays video/audio media content, output associated audio information of the video/audio media content.

Further, the property information of the media content is specifically:
identity information of the media content; and/or
tag information of the media content.

Further, the second processor is specifically configured to:
when the media content can be determined on the first page which is in the floating window based on the identity information of the media content, determine, on the first page, the media content based on the identity information of the media content; and/or
when the media content cannot be determined on the first page based on the identity information of the media content, determine, on the first page, the media content based on the identity information of the media content and the tag information of the media content.

The apparatus 200 may further include: a second input unit 230, which may be configured to receive an open operation performed by a user to open, on the second page, the sharing information of the media content. When receiving the open operation by using the second input unit 230, the second processor acquires the sharing information of the media content from the second page and resolves the source address information of the first page where the media content is located and the property information of the media content. Specifically, in this embodiment of the present invention, the second input unit 230 may include a second touch panel 231. The second touch panel 231, also called a touchscreen, may collect a touch operation (such as an operation performed by the user using a finger, a touch pen, and any proper object or accessory on the second touch panel 231 or on the second touch panel 231) performed by the user on or near the touchscreen and drive a corresponding connecting device according to a preset program. Optionally, the second touch panel 231 may include two parts: a touch detecting apparatus and a touch controller, where the touch detecting apparatus detects a touch direction of the user and a signal brought by the touch operation, and transmits the signal to the touch controller; and the touch controller receives touch information from the touch detecting apparatus, converts the touch information into touch coordinates, then transmits the touch coordinates to the second processor 260, and receives and executes a command sent from the second processor 260. In addition, multiple types of touchscreens, such as a resistive touchscreen, a capacitive touchscreen, an infrared touchscreen, and a surface acoustic wave touchscreen may be adopted to implement the second touch panel 231. In addition to the second touch panel 231, the second input unit 230 may further include one or more other input devices 232, where the one or more other input devices 232 may include but are not limited to one or more of the following: a physical keyboard, a function key (such as a volume control key and an on/off key), a trackball, a mouse, an operating lever, and the like.

The second processor 260 is a control center of the apparatus 200, uses various interfaces and cables to connect all parts of the whole apparatus, and performs functions of the apparatus 200 and processes data by running or executing a software program and/or a module stored in the second memory 220, so as to implement overall monitoring for the apparatus 200. Optionally, the processor 260 may include one or more processing units.

Finally, the apparatus 200 may further include: a second power supply 290, configured to supply power for the second processor 260, and/or the second memory 220, and/or the second input unit 230, and/or the second displaying unit 240, and/or the second audio circuit 270, and/or the second RF circuit 210, and/or the second WIFI module 280.

In this embodiment of the present application, a first client acquires source address information of a first page and property information of shared media content and publishes, on a second page, the source address information of the first page and the property information of the media content, so that a second client acquires, from the second page, the source address information of the first page and the property information of the media content, then acquires the first page according to the source address information of the first page, and further determines and displays the media content according to the property information of the media content. In this way, a technical problem in the prior art that source address information of media content cannot be extracted from some websites which do not provide a sharing service, causing that the media content cannot be shared, is effectively solved, thereby implementing a technical effect that media content can still be effectively and quickly shared in a case that source address information of the media content cannot be extracted.

A person skilled in the art should understand that the embodiments of the present invention may be provided as a method, a system, or a computer program product. Therefore, the present invention may be implemented in a form of a complete hardware embodiment, a complete software embodiment, or a combination of software and hardware embodiments. In addition, the present invention may be in a form of a computer program product implemented on one or more storage media available to a computer (including but not limited to a disk memory, a CD-ROM, an optical memory, and the like), where the storage media include program code available to the computer.

The present invention is described with reference to flowcharts and/or block diagrams based on the method, device (the system), and computer program product of the embodiments of the present invention. It should be understood that computer program instructions may implement each procedure and/or block in the flowcharts and/or block diagrams, or a combination of procedures and/or blocks in the flowcharts and/or block diagrams. The computer program instructions may be provided to a universal computer, a dedicated computer, an embedded processor, or a processor of another programmable data processing device to generate a machine, so that the instructions executed by the computer or the processor of another programmable data processing device generate an apparatus that is used to implement functions specified in one or more procedures in a flowchart and/or one or more blocks in a block diagram.

The computer program instructions may also be stored in a computer-readable memory capable of guiding the computer or another programmable data processing device to work in a specific manner, so that the instructions stored in the computer-readable memory generate a manufactured product that includes an instruction apparatus, where the instruction apparatus implements the functions specified in one or more procedures in a flowchart and/or one or more blocks in a block diagram.

The computer program instructions may also be loaded onto the computer or the another programmable data processing device, so that a series of operation steps are implemented on the computer or the another programmable device to generate processing implemented by the computer, and the instructions implemented on the computer or the another programmable device provide steps for implementing the functions specified in one or more procedures in a flowchart and/or one or more blocks in a block diagram.

Although exemplary embodiments of the present invention have been described, a person skilled in the art can make other changes and modifications to the embodiments once they learn the basic creative concept. Therefore, the claims attached hereto shall be construed as including exemplary embodiments and all changes and modifications that fall within the scope of the present invention.

Apparently, a person of ordinary skill in the prior art may implement various changes and modifications without departing the scope of the present invention. Provided that these changes and variations of the present invention are within the scope of the claims of the present invention and technical equivalents, the present invention is also intended to include these changes and variations.

## Claims

1. A method for sharing media content, comprising:
extracting, by a first client, source address information of a first page and property information of media content displayed on the first page; and
publishing, by the first client on a second page, the source address information of the first page and the property information of the media content, so that a second client can determine, on the second page based on the property information of the media content, the media content on the first page corresponding to the source address information of the first page, and display the media content.

2. The method according to claim 1, wherein the publishing, by the first client on a second page, the source address information of the first page and the property information of the media content comprises:
generating, by the first client, sharing information of the media content based on the source address information of the first page and the property information of the media content, wherein the sharing information of the media content comprises the source address information of the first page and the property information of the media content; and
publishing, by the first client on the second page, the sharing information of the media content.

3. The method according to any one of claims 1 to 2, wherein the property information of the media content is specifically:
identity information of the media content; and/or
tag information of the media content.

4. The method according to claim 1, wherein, before the extracting, by a first client, source address information of a first page and property information of media content displayed on the first page, the method further comprises:
monitoring, by the first client, whether a selecting operation performed by a user for the media content exists, wherein
the first client extracts the source address information of the first page and the property information of the media content when the first client intercepts the selecting operation.

5. A method for displaying media content, wherein the method comprises:
acquiring, by a second client from a second page, source address information of a first page and property information of media content displayed on the first page; and
determining, by the second client based on the property information of the media content, the media content on the first page corresponding to the source address information of the first page, and displaying the media content.

6. The method according to claim 5, wherein the acquiring, by a second client from a second page, source address information of a first page and property information of media content displayed on the first page comprises:
acquiring, by the second client, sharing information of the media content from the second page, wherein the sharing information of the media content comprises the source address information of the first page and the property information of the media content; and
parsing, by the second client, the sharing information of the media content to obtain the source address information of the first page and the property information of the media content.

7. The method according to claim 5, wherein the determining, by the second client based on the property information of the media content, the media content on the first page corresponding to the source address information of the first page, and displaying the media content comprises:
creating, by the second client, a floating window dynamically;
loading, by the second client, the first page in the floating window based on the source address information of the first page;
determining, by the second client on the first page which is in the floating window, the media content based on the property information of the media content; and
displaying, by the second client, the media content by using the floating window.

8. The method according to any one of claims 5 to 7, wherein the property information of the media content is specifically:
identity information of the media content; and/or
tag information of the media content.

9. The method according to claim 7, wherein the determining, by the second client on the first page which is in the floating window, the media content based on the property information of the media content comprises:
when the second client can determine, on the first page which is in the floating window, the media content based on the identity information of the media content, determining, by the second client on the first page, the media content based on the identity information of the media content; and/or
when the second client cannot determine, on the first page, the media content based on the identity information of the media content, determining, by the second client on the first page, the media content based on the identity information of the media content and the tag information of the media content.

10. An apparatus for sharing media content comprising:
a first display, configured to display a first page;
a first processor, configured to extract source address information of the first page and property information of media content displayed on the first page and publish, on a second page, the source address information of the first page and the property information of the media content.

11. The apparatus according to claim 10, wherein the first processor is specifically configured to:
generate sharing information of the media content based on the source address information of the first page and the property information of the media content, wherein the sharing information of the media content comprises the source address information of the first page and the property information of the media content; and publish, on the second page, the sharing information of the media content.

12. The apparatus according to claim 10 or 11, wherein the property information of the media content comprises at least one of identity information of the media content and tag information of the media content.

13. An apparatus for displaying media content, comprising:
a second processor, configured to acquire, from a second page, source address information of a first page and property information of media content displayed on the first page; and determine, based on the property information of the media content, the media content on the first page corresponding to the source address information of the first page, and control a second display to display the media content.

14. The apparatus according to claim 13, wherein the second processor is specifically configured to:
acquire sharing information of the media content from the second page, wherein the sharing information of the media content comprises the source address information of the first page and the property information of the media content; and parse the sharing information of the media content to obtain the source address information of the first page and the property information of the media content.

15. The apparatus according to claim 13 or 14, wherein the second processor is specifically configured to:
create a floating window dynamically;
load the first page in the floating window based on the source address information of the first page;
determine, on the first page which is in the floating window, the media content based on the property information of the media content; and
control the floating window to display the media content on the second display.
